# EUROPÄISCHE PATENTANMELDUNG

(11) **EP 3 971 013 A1**
(43) Veröffentlichungstag der Anmeldung: **23.03.2022**
(21) Anmeldenummer: 21196228.7
(22) Anmeldetag: 13.09.2021
(51) Int. Cl.: B60L 5/19, B60L 5/26, B60L 5/30, B60L 5/36

(54) **STROMABNEHMER UND EIN MIT EINEM SOLCHEN AUSGESTATTETES, ELEKTRISCH ODER HYBRIDELEKTRISCH ANGETRIEBENES STRASSENFAHRZEUG**

(30) Priorität: 21.09.2020 DE 102020211775
(71) Anmelder: Siemens Mobility GmbH, 81739 München (DE)
(72) Erfinder: Bühs, Florian, 10777 Berlin (DE); Molthan, Helge, 83075 Bad Feilnbach (DE)

(57) **Zusammenfassung**

Die Erfindung betrifft einen Stromabnehmer (2) für ein elektrisch oder hybridelektrisch angetriebenes Straßenfahrzeug (1) zur Einspeisung von Traktionsenergie aus einer zweipoligen, je Kontaktpol einen Fahrdraht (3) aufweisenden Oberleitungsanlage. Er umfasst ein aufrichtbares Traggestänge (4), welches sich fahrzeugseitig auf einer Gestängebasis (5) gelenkig abstützt und fahrdrahtseitig eine Wippenanordnung trägt. Dabei weist die Wippenanordnung je Kontaktpol ein Wippengestell (6) auf, welche gelenkig, um jeweils eine Fahrzeugquerachse (7) drehbar mit dem Traggestänge (4) verbunden sind. Indem auf jedem der Wippengestelle (6) genau eine, parallel zur Fahrzeugquerachse (7) angeordnete Schleifleiste (8) zur elektrischen Kontaktierung eines Fahrdrahtes (3) gelagert ist, kann ein Stromabnehmer (2) mit einfacherem Aufbau und verbessertem Kontaktverhalten zur Oberleitungsanlage bereitgestellt werden. Die Erfindung betrifft ferner ein Straßenfahrzeug (1) mit einem solchen Stromabnehmer (2).

## Beschreibung

Die Erfindung betrifft einen Stromabnehmer für ein elektrisch oder hybridelektrisch angetriebenes Straßenfahrzeug nach dem Oberbegriff des Patentanspruches 1.

Ein derartiges Fahrzeug mit Stromabnehmer ist beispielsweise aus der Offenlegungsschrift DE 10 2017 203 046 A1 bekannt. Es umfasst einen Stromabnehmer zur Energieeinspeisung aus einer zweipoligen Oberleitungsanlage. Der Stromabnehmer weist ein pantographenartig aufrichtbares Traggestänge auf, welches sich fahrzeugseitig auf einer Gestängebasis gelenkig abstützt und fahrdrahtseitig eine Wippenanordnung trägt. Die Wippenanordnung weist für jeden der beiden Kontaktpole ein Wippengestell auf. Jedes Wippengestell ist gelenkig, um jeweils eine Fahrzeugquerachse drehbar mit dem Traggestänge verbunden und trägt zwei parallele, sich quer zur Fahrzeuglängsachse erstreckende Schleifleisten zur elektrischen Kontaktierung des dem Kontaktpol zugeordneten Fahrdrahtes.

Stromabnehmer mit derartigen Wippenanordnungen haben eine hohes Gewicht, was deren Schwingungsverhalten negativ beeinflusst, und weisen ein hohe Komponentenanzahl auf, was mit einem erhöhten Fehlerrisiko in Betrieb, Fertigung und Montage einhergeht.

Der Erfindung liegt daher die Aufgabe zugrunde, einen Stromabnehmer der eingangs genannten Art mit einfacherem Aufbau und verbessertem Kontaktverhalten zur Oberleitungsanlage bereitzustellen.

Die Aufgabe wird gelöst durch einen gattungsgemäßen Stromabnehmer mit den im kennzeichnenden Teil des Patentanspruches 1 angegebenen Merkmalen. Dazu umfasst der Stromabnehmer für ein elektrisch oder hybridelektrisch angetriebenes Straßenfahrzeug zur Einspeisung von Traktionsenergie aus einer zweipoligen, je Kontaktpol einen Fahrdraht aufweisenden Oberleitungsanlage ein aufrichtbares Traggestänge, welches sich fahrzeugseitig auf einer Gestängebasis gelenkig abstützt und fahrdrahtseitig eine Wippenanordnung trägt. Die Wippenanordnung weist dabei je Kontaktpol ein Wippengestell auf, welche gelenkig, um jeweils eine Fahrzeugquerachse drehbar mit dem Traggestell verbunden sind. Erfindungsgemäß ist auf jedem der Wippengestelle genau eine, parallel zur Fahrzeugquerachse angeordnete Schleifleiste zur elektrischen Kontaktierung eines Fahrdrahtes gelagert. Durch den Einsatz von nur einer einzigen Schleifleiste je Kontaktpol wird die bewegte Masse der Wippenanordnung reduziert, so dass durch Vertikalschwingungen bedingte Kontaktkraftschwankungen schneller ausgeglichen werden können, was die Qualität der Anpresskraft der Schleifleisten an die Fahrdrähte verbessert und den Verschleiß der Schleifleisten reduziert. Außerdem wird durch die geringere Anzahl an Stromabnehmerkomponenten dessen Aufbau vereinfacht, was die Fehleranfälligkeit bei dessen Herstellung und Betrieb verringert.

In einer weiteren bevorzugten Ausführungsform des erfindungsgemäßen Stromabnehmers weist das Traggestänge je Kontaktpol einen aufrichtbaren Tragarm auf, mit jeweils einem sich an der Gestängebasis abstützenden Unterarm, einem mit dem Unterarm gelenkig verbundenen und das jeweilige Wippengestell tragenden Oberarm, einer mit Oberarm und Gestängebasis derart gelenkig verbundenen Koppelstange, dass beim Aufrichten des Tragarms der Oberarm relativ zum Unterarm gestreckt wird, und einer mit Unterarm und Wippengestell derart gelenkig verbundenen Führungsstange, dass beim Aufrichten des Tragarms das Wippengestell so geführt ist, dass die gelagerte Schleifleiste dem Fahrdraht zugewandt bleibt. Im Gegensatz zu dem eingangs genannten weist der Stromabnehmer in dieser Ausführungsform je Kontaktpol einen eigenen Tragarm auf.

In einer weiteren bevorzugten Ausführungsform des erfindungsgemäßen Stromabnehmers weisen die Führungsstangen jeweils ein Lineargelenk zur Längenänderung der Führungsstange auf. Die Lineargelenke können beispielsweise als Federelement oder als Federdämpfer in den Führungsstangen ausgebildet sein. Ebenso können diese auch in Form von Langlöchern am Befestigungspunkt der Führungsstangen an den jeweiligen Wippengestellen vorgesehen sein. Die Lineargelenke erlauben eine Längenänderung der Führungsstange im Vergleich zum jeweiligen Oberarm der Tragarme, wodurch eine Korrekturdrehung des Wippengestells um die jeweilige Fahrzeugquerachse möglich ist. Durch die Korrekturdrehung kann sich die beschliffene Kontaktfläche der vom Wippengestell getragenen Schleifleiste an Veränderungen einer Steigung oder eines Gefälles des Fahrdrahts relativ zur Fahrbahnoberfläche anpassen. Indem der Fahrdraht die Schleifleiste über ihre in Fahrtrichtung gemessene Breite möglichst komplett beschleift, kann die Kontaktgüte zwischen Stromabnehmer und Fahrdrähten verbessert werden.

In einer weiteren bevorzugten Ausführungsform des erfindungsgemäßen Stromabnehmers beträgt eine Breite der Schleifleisten in Fahrzeuglängsrichtung gemessen wenigstens 6 cm. Breiten von 6 cm oder mehr stellen eine im Vergleich zum Stand der Technik deutliche Verbreiterung der Schleifleisten dar, da bislang Breiten von maximal 4,2 cm üblich sind. Die vergrößerte Kontaktfläche bildet eine Verkippsicherung des Wippengestells mit Schleifleiste dar, was wiederum die Kontaktgüte des Stromabnehmers verbessert. Die Breite der Schleifleiste kann dabei umso größer gewählt werden, je höher die zu übertragende Stromstärke, die maximalen Fahrgeschwindigkeit des Straßenfahrzeugs und die Größe von auftretender Steigung bzw. Gefälle des Fahrdrahts relativ zur Fahrbahnoberfläche zu erwarten sind.

In einer weiteren bevorzugten Ausführungsform des erfindungsgemäßen Stromabnehmers sind die Schleifleisten jeweils derart federelastisch auf dem Wippengestell gelagert, dass eine Kippbewegung der Schleifleiste relativ zum Wippengestell um eine Fahrzeugquerachse ermöglicht ist. Die federelastische Lagerung ermöglicht einen zusätzlichen Kippfreiheitsgrad der Schleifleisten relativ zum Wippengestell. Die Lagerung kann beispielsweise durch eine Reihe von paarweise in Fahrtrichtung hintereinander angeordneter Federn gebildet sein, so dass bei Verkippung der Schleifleiste - beispielsweise bei einer Änderung der Fahrdrahtsteigung mit folgender Ausrichtung der Kontaktfläche der Schleifleiste - die eine Feder komprimiert und die andere Feder gedehnt wird. Die elastischen Rückstellkräfte der Federn bringen die Schleifleisten bei nachlassenden äußeren Krafteinwirkungen wieder selbsttätig in ihre unverkippten Ausgangslagen. Insbesondere in Kombination mit dem Lineargelenken und der Schleifleistenverbreiterung wird hier ein effektiver Ausgleichsmechanismus bereitgestellt, der die Schleifleisten zum Ausgleich von Steigungen und Gefällen der Fahrdrähte relativ zur Fahrbahnoberfläche beziehungsweise der Stromabnehmerbasis neigt. Insgesamt wird durch den erreichten gleichmäßigen Schleifkontakt mit konstanter Kontaktfläche zwischen Schleifleisten und Fahrdrähten die Kontaktgüte verbessert.

In einer weiteren bevorzugten Ausführungsform des erfindungsgemäßen Stromabnehmers sind die Wippengestelle durch ein Brückenglied derart verbunden, dass ein Eintauchen eines Fahrdrahtes zwischen die Schleifleisten verhindert ist. Das Brückenglied kann beispielsweise an den Wippengestellen gelenkig montiert werden und ist derart angeordnet und geformt, dass ein Abrutschen eines Fahrdrahtes in den Zwischenraum zwischen die benachbarten Wippengestelle verhindert wird. Das Brückenglied kann als isolierender Bügel ausgebildet sein. Hierdurch wird ein Einfädeln eines Fahrdrahtes unter eine Schleifleiste oder ein Wippengestell und dadurch bedingte Beschädigungen am Stromabnehmer oder an der Oberleitungsanlage vermieden.

In einer weiteren bevorzugten Ausführungsform des erfindungsgemäßen Stromabnehmers ist das Brückenglied über Ausgleichsgelenke mit den Wippengestellen verbunden, welche eine Relativbewegung zwischen den Wippengestellen zulassen. Die gelenkige Verbindung mit den Wippengestellen erlaubt einen Ausgleich unterschiedlicher Längspositionen und von Höhendifferenzen zwischen den Wippengestellen.

In einer weiteren bevorzugten Ausführungsform des erfindungsgemäßen Stromabnehmers wirken die Ausgleichsgelenke mit Anschlagelementen zusammen, welche die Relativbewegung zwischen den Wippengestellen begrenzen. Indem die Anschlagelemente direkt mit den Ausgleichsgelenken des Brückenglieds zusammenwirken, ist eine Einstellbarkeit zur Begrenzung der Höhendifferenz der Wippengestelle am Ort ihrer Entstehung gegeben. Dies steigert die Verfügbarkeit des Stromabnehmers und vereinfacht erheblich die Einstellung der erlaubten Höhendifferenz.

In einer weiteren bevorzugten Ausführungsform des erfindungsgemäßen Stromabnehmers ist das Traggestänge mit einem Hubantrieb zum gemeinsamen Aufrichten der Tragarme gekoppelt. Jeder der beiden Tragarme kann durch einen separaten Hubantrieb aufgerichtet werden. Vorzugsweise genügt aber nur ein einzelner, als Luftbalg ausgebildeter Antrieb zum Anheben beider Wippengestelle.

Die Erfindung betrifft ferner ein Straßenfahrzeug, umfassend einen elektrischen oder hybridelektrischen Traktionsantrieb und einen Stromabnehmer nach einem der Ansprüche 1 bis 9.

Weitere Eigenschaften und Vorteile ergeben sich aus nachfolgender Beschreibung eines Ausführungsbeispiels des erfindungsgemäßen Stromabnehmers anhand der Zeichnungen, in deren
- FIG 1: der Stromabnehmer in Fahrtrichtung,
- FIG 2: der Stromabnehmer quer zur Fahrtrichtung und
- FIG 3: ein Ausgleichsmechanismus des Stromabnehmers quer zur Fahrtrichtung
schematisch veranschaulicht sind.

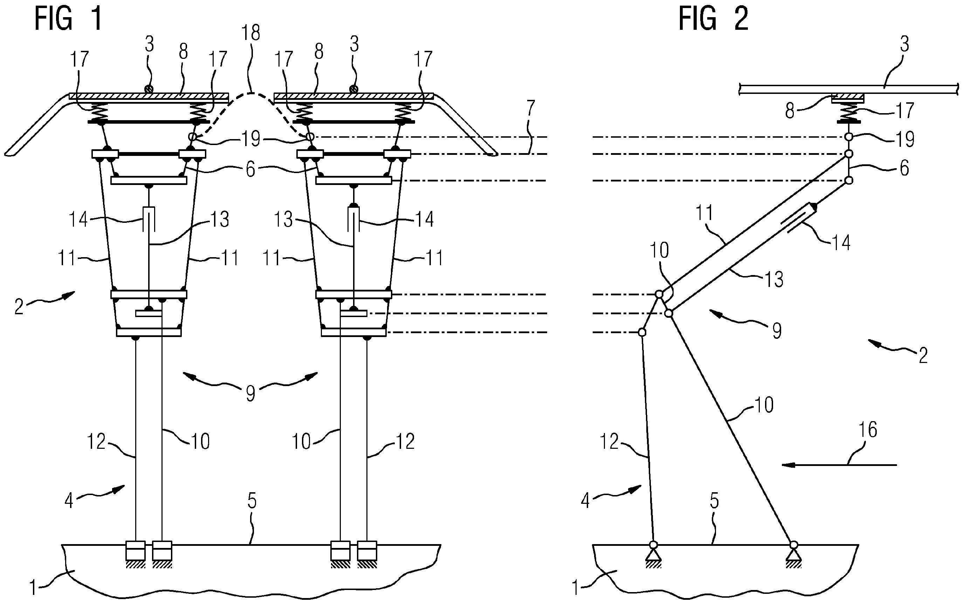

FIG 1 und FIG 2 zeigen einen Stromabnehmer 2 für ein elektrisch oder hybridelektrisch angetriebenes Straßenfahrzeug 1, beispielsweise ein schweres Nutzfahrzeug oder einen Bus, der Einspeisung von Traktionsenergie aus einer zweipoligen, je Kontaktpol einen Fahrdraht 3 aufweisenden Oberleitungsanlage ausgebildet und vorgesehen ist. Der Stromabnehmer 2 umfasst ein aufrichtbares Traggestänge 4, welches sich fahrzeugseitig auf einer Gestängebasis 5 gelenkig abstützt und fahrdrahtseitig eine Wippenanordnung trägt. Die Wippenanordnung weist dabei je Kontaktpol ein Wippengestell 6 auf. Jedes Wippengestell 6 ist gelenkig, um jeweils eine Fahrzeugquerachse 7 drehbar mit dem Traggestänge 4 verbunden. Das Traggestänge 4 weist je Kontaktpol einen aufrichtbaren Tragarm 9 auf. Jeder Tragarm 9 hat einen sich an der Gestängebasis abstützenden Unterarm 10, einen mit dem Unterarm 10 gelenkig verbundenen und das jeweilige Wippengestell 6 tragenden Oberarm 11. Je eine Koppelstange 12 ist mit Oberarm 11 und Gestängebasis 5 derart gelenkig verbunden, dass beim Aufrichten eines Tragarms 9 dessen Oberarm 11 relativ zum Unterarm 10 gestreckt wird. Je eine Führungsstange 13 ist mit Unterarm 10 und Wippengestell 6 derart gelenkig verbunden, dass beim Aufrichten des Tragarms 9 das Wippengestell 6 so geführt ist, dass eine auf dem Wippengestell 6 gelagerte Schleifleiste 8 dem Fahrdraht 3 zugewandt bleibt.

Erfindungswesentlich ist, dass auf jedem der Wippengestelle 6 genau eine, parallel zur Fahrzeugquerachse 7 angeordnete Schleifleiste 8 zur elektrischen Kontaktierung des dem Kontaktpol zugeordneten Fahrdrahtes 3 gelagert ist. Dadurch wird die bewegte Masse der Wippenanordnung reduziert, was das Schwingungsverhalten der Wippenanordnung verbessert und dadurch bedingte Kontaktkraftschwankungen schneller ausgeglichen werden können. Zudem wird durch die geringere Anzahl an Stromabnehmerkomponenten dessen Aufbau vereinfacht, was die Fehleranfälligkeit bei dessen Herstellung und Betrieb verringert.

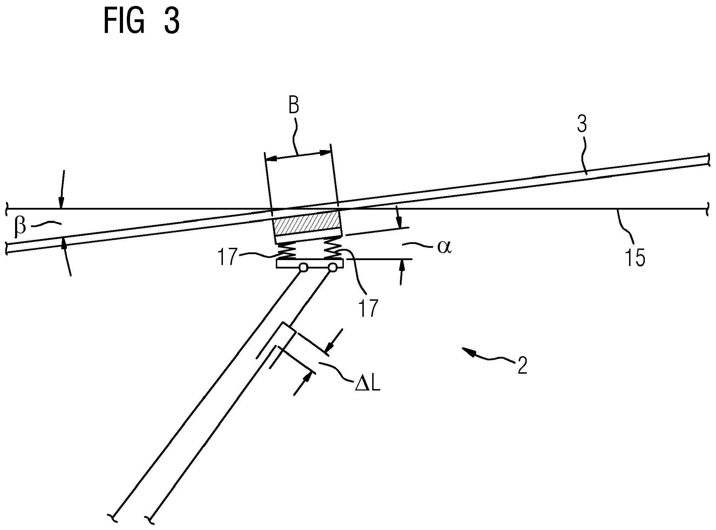

Unter zusätzlichem Verweis auf FIG 3 weisen die Führungsstangen 13 jeweils ein Lineargelenk 14 zur Längenänderung ΔL der Führungsstange 13 auf. Die Lineargelenke 14 können beispielsweise als Federelement oder als Federdämpfer in den Führungsstangen 13 ausgebildet sein. Die Lineargelenke 14 erlauben eine Längenänderung ΔL der Führungsstange 13 im Vergleich zum jeweiligen Oberarm 11 der Tragarme 9, wodurch eine Korrekturdrehung des Wippengestells 6 um die jeweilige Fahrzeugquerachse 7 möglich ist. Durch die Korrekturdrehung kann sich die beschliffene Kontaktfläche der vom Wippengestell 6 getragenen Schleifleiste 8 an Veränderungen einer Steigung β oder eines Gefälles β des Fahrdrahts 3 relativ zur Fahrbahnoberfläche 15 anpassen.

Eine Breite B der Schleifleisten 8 in Fahrzeuglängsrichtung 16 gemessen beträgt wenigstens 6 cm. Die vergrößerte Kontaktfläche bildet eine Verkippsicherung des Wippengestells 6, was wiederum die Kontaktgüte des Stromabnehmers 2 verbessert. Die Breite B der Schleifleiste kann dabei umso größer gewählt werden, je höher die zu übertragende Stromstärke, die maximalen Fahrgeschwindigkeit des Straßenfahrzeugs 1 und die Größe von auftretender Steigung β bzw. Gefälle β des Fahrdrahts 3 relativ zur Fahrbahnoberfläche 15 zu erwarten sind.

Die Schleifleisten 8 sind jeweils derart federelastisch auf dem Wippengestell 6 gelagert, dass eine Kippbewegung α der Schleifleiste 8 relativ zum Wippengestell 6 um eine Fahrzeugquerachse ermöglicht ist. Die federelastische Lagerung ermöglicht einen zusätzlichen Kippfreiheitsgrad der Schleifleisten 8 relativ zum Wippengestell 6. Die Lagerung kann beispielsweise durch eine Reihe von paarweise in Fahrtrichtung 16 hintereinander angeordneter Kippfedern 17 gebildet sein. Die elastischen Rückstellkräfte der Kippfedern 17 bringen die Schleifleisten 8 bei nachlassenden äußeren Krafteinwirkungen wieder selbsttätig in ihre unverkippten Ausgangslagen. Insbesondere in Kombination mit dem Lineargelenken 14 und der Schleifleistenverbreiterung wird hier ein effektiver Ausgleichsmechanismus bereitgestellt, der die Schleifleisten 8 zum Ausgleich von Steigungen β und Gefällen β der Fahrdrähte 3 relativ zur Fahrbahnoberfläche 15 beziehungsweise der Gestängebasis 5 neigt. Insgesamt wird durch den erreichten gleichmäßigen Schleifkontakt mit konstanter Kontaktfläche zwischen Schleifleisten 8 und Fahrdrähten 3 die Kontaktgüte verbessert.

Die Wippengestelle 6 sind derart durch ein Brückenglied 18 verbunden, dass ein Eintauchen eines Fahrdrahtes 3 zwischen die Schleifleisten 8 verhindert ist. Das Brückenglied 18 ist in FIG 1 als Strichlinie dargestellt und kann beispielsweise an den Wippengestellen 6 gelenkig montiert werden. Es ist derart angeordnet und geformt, dass ein Abrutschen eines Fahrdrahtes 3 in den Zwischenraum zwischen die benachbarten Wippengestelle 6 verhindert wird. Das Brückenglied 18 kann als elektrisch isolierender Bügel ausgebildet sein. Das Brückenglied 18 ist über Ausgleichsgelenke 19 mit den Wippengestellen 6 verbunden, welche eine Relativbewegung zwischen den Wippengestellen 6 zulassen. Die gelenkige Verbindung mit den Wippengestellen 6 erlaubt einen Ausgleich unterschiedlicher Längspositionen und von Höhendifferenzen zwischen den Wippengestellen 6. Die Ausgleichsgelenke 19 wirken dabei mit Anschlagelementen zusammen, welche die Relativbewegung zwischen den Wippengestellen 6 begrenzen. Indem die Anschlagelemente direkt mit den Ausgleichsgelenken 19 des Brückenglieds 18 zusammenwirken, ist eine Einstellbarkeit zur Begrenzung der Höhendifferenz der Wippengestelle 6 am Ort ihrer Entstehung gegeben.

Das Traggestänge ist mit einem an sich bekannten und daher nicht dargestellten Hubantrieb zum gemeinsamen Aufrichten der Tragarme 9 gekoppelt, der als Luftbalg ausgebildet sein kann.

## Patentansprüche

1. Stromabnehmer (2) für ein elektrisch oder hybridelektrisch angetriebenes Straßenfahrzeug (1) zur Einspeisung von Traktionsenergie aus einer zweipoligen, je Kontaktpol einen Fahrdraht (3) aufweisenden Oberleitungsanlage, umfassend
- ein aufrichtbares Traggestänge (4), welches sich fahrzeugseitig auf einer Gestängebasis (5) gelenkig abstützt und fahrdrahtseitig eine Wippenanordnung trägt,
- wobei die Wippenanordnung je Kontaktpol ein Wippengestell (6) aufweist, welche gelenkig, um jeweils eine Fahrzeugquerachse (7) drehbar mit dem Traggestänge (4) verbunden sind, **dadurch gekennzeichnet,**
- **dass** auf jedem der Wippengestelle (6) genau eine, parallel zur Fahrzeugquerachse (7) angeordnete Schleifleiste (8) zur elektrischen Kontaktierung eines Fahrdrahtes (3) gelagert ist.

2. Stromabnehmer (2) nach Anspruch 1, wobei das Traggestänge (4) je Kontaktpol einen aufrichtbaren Tragarm (9) aufweist mit jeweils
- einem sich an der Gestängebasis (5) abstützenden Unterarm (10),
- einem mit dem Unterarm (10) gelenkig verbundenen und das jeweilige Wippengestell (6) tragenden Oberarm (11),
- einer mit Oberarm (11) und Gestängebasis (5) derart gelenkig verbundenen Koppelstange (12), dass beim Aufrichten des Tragarms (9) der Oberarm (11) relativ zum Unterarm (10) gestreckt wird, und
- einer mit Unterarm (10) und Wippengestell (6) derart gelenkig verbundenen Führungsstange (13), dass beim Aufrichten des Tragarms (9) das Wippengestell (6) so geführt ist, dass die gelagerte Schleifleiste (8) dem Fahrdraht (3) zugewandt bleibt.

3. Stromabnehmer (2) nach Anspruch 2, wobei die Führungsstangen (13) jeweils ein Lineargelenk (14) zur Längenänderung (ΔL) der Führungsstange (13) aufweist.

4. Stromabnehmer (2) nach Anspruch 2 oder 3, wobei eine Breite (B) der Schleifleisten (8) in Fahrzeuglängsrichtung (16) gemessen wenigstens 6 cm beträgt.

5. Stromabnehmer (2) nach einem der Ansprüche 2 bis 4, wobei die Schleifleisten (8) jeweils derart federelastisch auf dem Wippengestell (6) gelagert sind, dass eine Kippbewegung (α) der Schleifleiste (8) relativ zum Wippengestell (6) um eine Fahrzeugquerachse ermöglicht ist.

6. Stromabnehmer (2) nach einem der Ansprüche 1 bis 5, wobei die Wippengestelle (6) durch ein Brückenglied (18) derart verbunden sind, dass ein Eintauchen eines Fahrdrahtes (3) zwischen die Schleifleisten (8) verhindert ist.

7. Stromabnehmer (2) nach Anspruch 6, wobei das Brückenglied (18) über Ausgleichsgelenke (19) mit den Wippengestellen (6) verbunden ist, welche eine Relativbewegung zwischen den Wippengestellen (6) zulassen.

8. Stromabnehmer (2) nach Anspruch 7, wobei die Ausgleichsgelenke (19) mit Anschlagelementen zusammenwirken, welche die Relativbewegung zwischen den Wippengestellen (6) begrenzen.

9. Stromabnehmer (2) nach einem der Ansprüche 2 bis 8, wobei das Traggestänge (4) mit einem Hubantrieb zum gemeinsamen Aufrichten der Tragarme (9) gekoppelt ist.

10. Straßenfahrzeug (1), umfassend einen elektrischen oder hybridelektrischen Traktionsantrieb und einen Stromabnehmer (2) nach einem der Ansprüche 1 bis 9.
